# EUROPÄISCHE PATENTSCHRIFT

(11) **EP 3 363 728 B1**
(45) Veröffentlichungstag und Bekanntmachung des Hinweises auf die Patenterteilung: **14.10.2020**
(21) Anmeldenummer: 18157390.8
(22) Anmeldetag: 23.12.2013
(51) Int. Cl.: B63C 11/46, B63H 21/17, H01M 10/625

(54) **WASSERFAHRZEUG MIT REDUNDANTEM ENERGIESPEICHER**
WATERCRAFT WITH REDUNDANT ENERGY STORE
EMBARCATION À ACCUMULATEUR D'ÉNERGIE REDONDANT

(30) Priorität: 18.01.2013 DE 102013100543
(43) Veröffentlichungstag der Anmeldung: 22.08.2018
(62) Teilanmeldung aus: 13814160.1
(73) Patentinhaber: CAYAGO TEC GmbH, 32108 Bad Salzuflen (DE)
(72) Erfinder: WALPURGIS, Hans-Peter, 6352 Ellmau (AT)
(74) Vertreter: Herrmann, Jochen

(56) Entgegenhaltungen:
- DE-A1- 3 523 758
- JP-A- H0 585 471
- US-A- 2 722 021
- US-A1- 2001 042 498
- US-A1- 2007 283 865
- US-A1- 2008 168 937

## Beschreibung

Die Erfindung betrifft ein Wasserfahrzeug mit einem Rumpf der einen Strömungskanal aufweist oder dem ein Strömungskanal zugeordnet ist, wobei dem Strömungskanal eine Wasser-Beschleunigungsanordnung, insbesondere ein Propeller zugeordnet ist, und wobei der Motor an einen Energiespeicher angeschlossen ist.

Ein derartiges Wasserfahrzeug ist aus der DE 10 2004 049 615 B4 un der JP H05 85471 A bekannt. Dieses
Wasserfahrzeug weist einen Rumpf auf, der eine Liegefläche bildet, auf der ein Benutzer im Bereich seines Oberkörpers zumindest teilweise aufliegen kann. Der Rumpf besitzt zwei Haltegriffe mit Steuerungselementen. Über diese Steuerungselemente kann eine Motoranordnung leistungsreguliert werden. Die Motoranordnung treibt einen Propeller an. Der Propeller ist in einem Strömungskanal angeordnet, wobei der Propeller im Bereich der Fahrzeugunterseite eine Ansaugöffnung bildet über die das Wasser aus der Umgebung angesaugt werden kann. Das Wasser wird im Strömungskanal mittels des Propellers beschleunigt und rückseitig wie bei einem Jetantrieb ausgestoßen. Der Propeller wird von einem Elektromotor angetrieben, der über Versorgungsleitungen an einen Akkumulator als Energiespeicher angeschlossen ist. Der Energiespeicher ist in einem Gehäuse untergebracht und das Gehäuse ist in eine frontseitige Ausnehmung des Rumpfes außenseitig eingebaut. Derartige Wasserfahrzeuge werden teilweise als Tauchschlitten eingesetzt mit denen Taucher über längere Distanzen Tauchgänge durchführen, vor allem wenn die Wasserfahrzeuge im Bereich des offenen Meeres eingesetzt werden, ist Betriebssicherheit und ein hoher Fahrkomfort von Bedeutung.

Es ist Aufgabe der Erfindung ein Wasserfahrzeug der eingangs erwähnten Art bereitzustellen, das sich durch einen hohen Benutzerkomfort auszeichnet.

Diese Aufgabe wird dadurch gelöst, dass zwei Energiespeicher im Rumpf verbaut sind, wobei die Energiespeicher beidseitig der in Längsrichtung des Rumpfes verlaufen Mittellängsebene angeordnet sind.

Infolge der Verwendung zweier Energiespeicher wird die Betriebssicherheit deutlich erhöht. Insbesondere kann ein Benutzer bei Ausfall eines Energiespeichers, beispielsweise aufgrund unvorhergesehener Betriebszustände den zweiten Energiespeicher nutzen um somit sicher zu seinem Ausgangspunkt zurückzukehren. Auf diese Weise wird eine Redundanz geschaffen. Dadurch dass die Energiespeicher beidseitig der in Fahrtrichtung verlaufenden Mittellängsebene angeordnet sind, wird ein Gewichtstrimm des Wasserfahrzeuges erreicht. Hierdurch wird der Fahrkomfort insbesondere deshalb deutlich verbessert, weil die Masse des Energiespeichers im Bauraum des Rumpfes gleichmäßiger verteilt angeordnet ist. Dies erhöht insbesondere die Lage und Fahrstabilität.

Gemäß einer bevorzugten Erfindungsausgestaltung ist es vorgesehen, dass die Energiespeicher zumindest bereichsweise beidseitig des Strömungskanals angeordnet sind. Hierdurch wird eine kompakte Bauweise erreicht. Weiterhin kann das durch die rotierende Wasser-Beschleunigungsanordnung induzierte Drehmoment zumindest teilweise stabilisiert werden, wodurch sich die Fahrstabilität weiter verbessert.

Besonders vorteilhaft ist es zum Zwecke der gleichmäßigen Gewichtsverteilung die Energiespeicher symmetrisch zur Mittellängsebene anzuordnen.

Die Energiespeicher, beispielsweise Akkumulatoren, erzeugen während des Betriebs eine Verlustwärme. Um eine Überhitzung der Akkumulatoren und damit einem vorzeitigen Ausfall vorzubeugen, kann es gemäß einer Erfindungsvariante vorgesehen sein, dass zusätzlich zum Strömungskanal ein wasserdurchströmbarer Flutungsraum im Rumpf angeordnet ist, und dass die Energiespeicher im Flutungsraum zumindest bereichsweise angeordnet sind. Dabei können die Energiespeicher zumindest einen Teil ihrer Verlustwärme in das umströmende Wasser abtauschen.

Gemäß einer bevorzugten Erfindungsausgestaltung kann es vorgesehen sein, dass zumindest einer der Energiespeicher in wenigstens zwei Einbaupositionen im Rumpf festlegbar ist, wobei die Einbauposition in Richtung der Längsachse des Wasserfahrzeuges zueinander versetzt angeordnet sind. Auf diese Weise kann der Massenschwerpunkt der Energiespeicher in Längsrichtung des Wasserfahrzeuges versetzt werden. Hierdurch lässt sich die Trimmlage des Wasserfahrzeuges anpassen.

Ein erfindungsgemäßes Wasserfahrzeug kann auch dadurch gekennzeichnet sein, dass der Rumpf ein Oberteil und ein mit diesem auswechselbar verbindbares Unterteil aufweist, wobei in dem vom Oberteil und dem Unterteil umschlossenen Raum Aufnahmen für die Energiespeicher gebildet sind in denen die Energiespeicher demontierbar angeordnet sind. Diese Konstruktion ist zum einen besonders wartungsfreundlich, da die Energiespeicher leicht zugänglich sind und im Bedarfsfall ausgetauscht werden können. Hierzu muss lediglich das Unterteil vom Oberteil demontiert werden. Zudem bietet diese Bauweise ein einfaches Konstruktionsprinzip, denn die Energiespeicher können im geschützten Bauraum zwischen Ober- und Unterteil positioniert werden. Insbesondere sind die Energiespeicher vor mechanischer Außeneinwirkung geschützt.

Es hat sich als besonders vorteilhaft erwiesen, wenn der Massenschwerpunkt der Energiespeicher in Richtung zum Heck versetzt zu der senkrecht zur Längsachse stehenden Mittelquerebene angeordnet ist. Diese Konstruktion ist besonders dann vorteilhaft, wenn Bauteile mit hoher Masse, wie der Antriebsmotor und Steuerungsbauteile im Bereich des Bugs angeordnet sind.

Ein erfindungsgemäßes Wasserfahrzeug kann dadurch gekennzeichnet sein, dass an eine Steuerelektronik eine Überwachungseinrichtung angeschlossen ist, die einen oder mehrere Betriebszustände der Energiespeicher überwacht, und dass die Steuerelektronik eine Schalteinrichtung aufweist, mittels der wahlweise jeweils einer oder beide Energiespeicher an den Motor anschließbar sind. Beispielsweise kann die Überwachungseinrichtung die Temperatur des Energiespeichers überwachen und im Falle einer unzulässigen Überschreitung einer Maximaltemperatur kann dieser mittels der Schalteinrichtung abgeschaltet werden. Dann wird im Sinne einer redundanten Betriebsweise der Motor alleine von dem zweiten Energiespeicher versorgt. Eine solche Anordnung erhöht die Betriebssicherheit des Wasserfahrzeuges deutlich.

Die Aufgabe der Erfindung wird auch gelöst mit einem Bausatz für ein Wasserfahrzeug mit einem Rumpf, der einen Strömungskanal aufweist oder in dem ein Strömungskanal zugeordnet ist, wobei dem Strömungskanal eine motorbetriebene Wasser-Beschleunigungsanordnung, insbesondere ein Propeller zugeordnet ist, und wobei der Motor an einem Energiespeicher angeschlossen ist. Erfindungsgemäß ist hierbei vorgesehen, dass der Rumpf Aufnahmen für zwei im Rumpf verbaubare Energiespeicher aufweist, wobei die Aufnahmen derart ausgelegt sind, dass wahlweise Energiespeicher unterschiedlicher Baugröße darin festlegbar sind. Mit den beiden Energiespeichern wir wieder eine redundante Betriebsweise gesichert. Dadurch, dass die Aufnahmen auf Energiespeicher unterschiedlicher Baugröße und unterschiedlicher Leistungskapazität ausgelegt sind, kann auf einfache Weise eine Leistungsvariation durchgeführt werden. Damit lassen sich mit einer Rumpfkonstruktion verschiedene Modelvarianten generieren oder es lässt sich ein vorhandenes Wasserfahrzeug einfach durch den Austausch der Energiespeicher in eine leistungsstärkere Typenvariante umbauen.

Die Erfindung wird im Folgenden anhand eines in den Zeichnungen dargestellten Ausführungsbeispiels näher erläutert. Es zeigen:
- Fig. 1: in perspektivischer Seitenansicht von hinten ein Wasserfahrzeug,
- Fig. 2: das Wasserfahrzeug gemäß Fig. 1 in perspektivischer Seitenansicht von unten und mit abgenommenem Unterteil,
- Fig. 3: einen Vertikalschnitt durch den Heckbereich des Wasserfahrzeuges gemäß der Ansicht nach Fig. 2 und
- Fig. 4: das Wasserfahrzeug gemäß Fig. 2 in Detailansicht von unten.

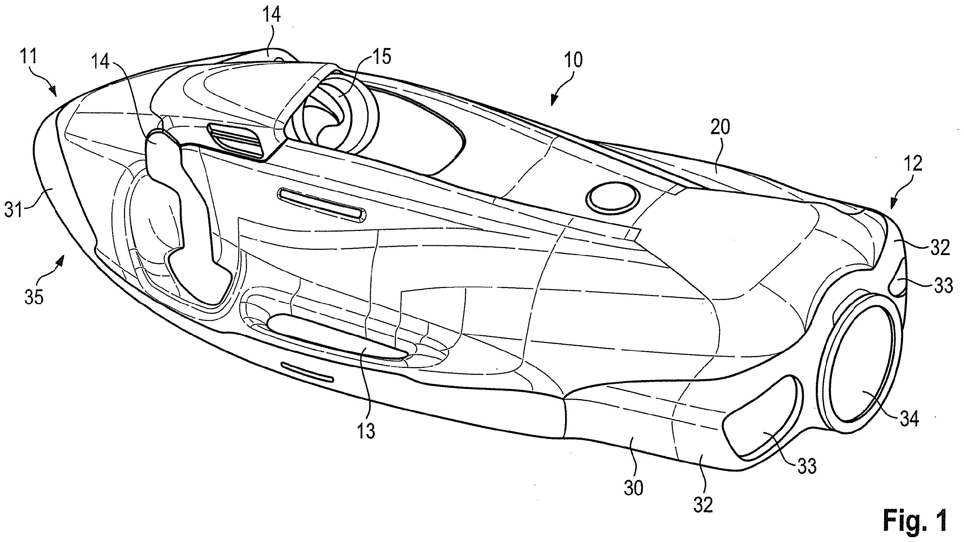

In Fig. 1 ist ein Wasserfahrzeug gezeigt, dass einen Rumpf 10 aufweist. Dabei ist der Rumpf 10 aus einem Oberteil 20 und einem Unterteil 30 zusammengesetzt. Das Oberteil ist mit zwei Steuergriffen 14 ausgerüstet die beidseitig des Rumpfes 10 angeordnet sind. An diesen Steuergriffen14 kann sich ein Benutzer festhalten und das Wasserfahrzeug mit an den Steuergriffen 14 angebrachten Bedienelementen steuern. Insbesondere kann hier die Motorleistung des Wasserfahrzeuges variiert werden. Der Benutzer, der sich an den Steuergriffen 14 festhält, liegt mit seinem Oberkörper im Bereich hinter einem Display 15 bereichsweise auf dem Oberteil 20 auf.

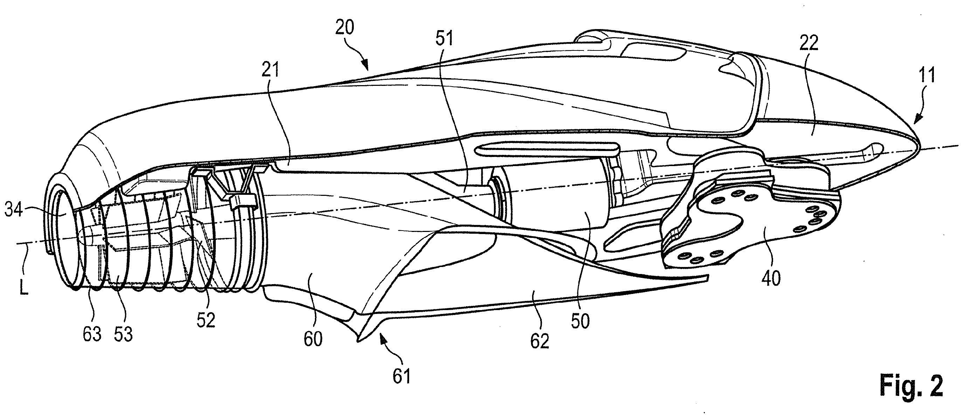

Wie Fig. 2 erkennen lässt, kann das Unterteil 30 vom Oberteil 20 demontiert werden. Es ist zu diesem Zwecke an das Oberteil 20 angeschraubt. Fig. 2 zeigt das Wasserfahrzeug bei abgenommenem Unterteil 30. Wie diese Darstellung erkennen lässt, ist mithin zwischen dem Oberteil 20 und dem Unterteil 30 ein Aufnahmeraum gebildet. Dieser Aufnahmeraum wird zur Oberseite mittels einer Bodenwand 22 des Oberteils 20 begrenzt. An dieser Bodenwand 22 können stabil Komponenten des Wasserfahrzeuges montiert werden.

Wie Fig. 2 erkennen lässt, ist im Bereich des Bugs 11 des Wasserfahrzeuges eine Steuerelektronik 40 montiert. In Richtung zum Heck 12 versetzt ist hinter der Steuerelektronik 40 ein als Elektromotor 50 ausgeführtes Antriebsaggregat geschützt in einem Gehäuse untergebracht. Die Abtriebswelle des Motors 50 ist durch ein Hüllrohr 51 hindurchgeführt und trägt an seinem freien Ende einen Propeller 52. Der Propeller 52 ist in einem Strömungskanal 60 angeordnet. Dabei wird der Strömungskanal 60 von einem Hohlkörper gebildet, der im Bereich der Unterseite des Wasserfahrzeuges eine Ansaugöffnung 61 bildet. Diese Ansaugöffnung 61 ist mit einem mittig in der Ansaugöffnung 61 angeordneten Leitelement 62 stabilisiert. Das Leitelement 62 hat zusätzlich zu seiner mechanischen Schutzfunktion die Aufgabe den Fahrbetrieb zu stabilisieren. Es wirkt dabei ähnlich wie das Schwert eines Segelbootes. Weiterhin schützt das Leitelement 62 auch den Strömungskanal 61 im, Bereich der Ansaugöffnung vor mechanischer Beanspruchung, wenn das Wasserfahrzeug auf Grund läuft oder an Land abgelegt wird. Im Bereich zwischen dem Oberteil 20 und dem Unterteil 30 ist, wie vorstehend erwähnt wurde, unterhalb der Bodenwand 22 ein Aufnahmeraum gebildet, in dem die elektrischen Komponenten, nämlich die Steuerelektronik 40, der Motor 50 und die Energiespeicher 70 (Akkumulatoren) untergebracht sind. Dieser Aufnahmeraum steht über Wasserdurchtrittsöffnungen mit der Umgebung in Verbindung. Dabei sind die Wasserdurchtrittsöffnungen im Unterteil 30 ausgebildet. Wie Fig. 1 erkennen lässt, sind die Wasserdurchtrittsöffnungen im Bereich des Bugs 11 als Wassereintrittsöffnungen 35 und im Bereich des Hecks 12 als Wasseraustrittsöffnungen 33 ausgeführt. Der Aufnahmeraum bildet mithin einen Flutungsraum. Dieser wird, sobald das Wasserfahrzeug in das Wasser gesetzt wird mit Wasser geflutet, das durch die Wasserdurchtrittsöffnungen eindringt. Sobald das Wasserfahrzeug in den Fahrbetrieb übergeht, wird im Flutungsraum eine Strömung erzeugt. Dementsprechend tritt Wasser durch die Wassereintrittsöffnungen 35 in den Flutungsraum ein. Das Wasser durchströmt den Flutungsraum und umspült dabei die im Flutungsraum gehaltenen elektrischen Baueinheiten. Dabei nimmt das Wasser die Verlustleistung der elektrischen Baueinheiten auf und kühlt diese. Nach Durchströmen des Flutungsraums verlässt das Wasser diesen durch die Wasseraustrittsöffnungen 33, die symmetrisch beidseitig des Strahlaustritts 34 angeordnet sind.

Fig. 2 lässt weiter erkennen, dass der Strömungskanal 60 im Bereich des Flutungsraums verläuft und zwei Teilbereiche im Flutungsraum gegeneinander bereichsweise abgrenzt. In jedem der Teilbereiche ist jeweils ein Energiespeicher (Akkumulator) angeordnet. Jeder der Teilbereiche weist auch eine der beiden Wasseraustrittsöffnungen 33 auf. Die elektrischen Baueinheiten sind mittels Aufhängungen an der Bodenwand 22 des Oberteils 20 angebracht. Dabei ist die Aufhängung so gewählt, dass die elektrischen Baueinheiten an den Bereichen, über die die Verlustwärme abgetauscht wird, beabstandet zu der Bodenwand 22 gehalten sind. Damit kann das Wasser im Flutungsraum die Baueinheiten hier effektiv umströmen. Es hat sich gezeigt, dass die Anordnung des Strömungskanals 60 im Flutungsraum eine Querschnittsverjüngung des Flutungsraums mit sich bringt. Dadurch wird eine Erhöhung der Strömungsgeschwindigkeit im verjüngten Bereich erzielt. Durch diese Geschwindigkeitsvariation lässt sich abhängig von der zu kühlenden elektrischen Komponente gezielt die Wasserströmung und damit die Kühlwirkung einstellen. Im vorliegenden Ausführungsbeispiel sind die Energiespeicher 70 im Bereich der verjüngten Querschnitte in den Teilbereichen angeordnet.

An seinem der Ansaugöffnung 61 in Strömungsrichtung abgewandten Ende bildet der Hohlkörper einen Flanschbereich an dem ein in Impellergehäuse 63 angeflanscht werden kann. Der Propeller 52 ragt in das Impellerghäuse 63. In Strömungsrichtung hinter dem Propeller 52 ist ein Strömungsstator 53 angeordnet. Während des Betriebs saugt der Propeller 52 Wasser durch die Ansaugöffnung 61 in den Strömungskanal 16, beschleunigt diese und stößt es durch das Impellergehäuse 63 im Bereich eines Strahlaustritts 34 aus. Der Stator 53 hat dabei die Aufgabe die rotierende Wasserbewegung geradezurichten, sodass zum Zwecke einer Wirkungsgradverbesserung die Strömung am Strahlaustritt möglichst drallfrei austritt. Wie Fig. 1 erkennen lässt, besitzt das Oberteil 20 im Bereich der Bodenwand 22 Aufnahmen 21. Diese Aufnahmen 21 sind beidseitig des Strömungskanals 60 angeordnet.

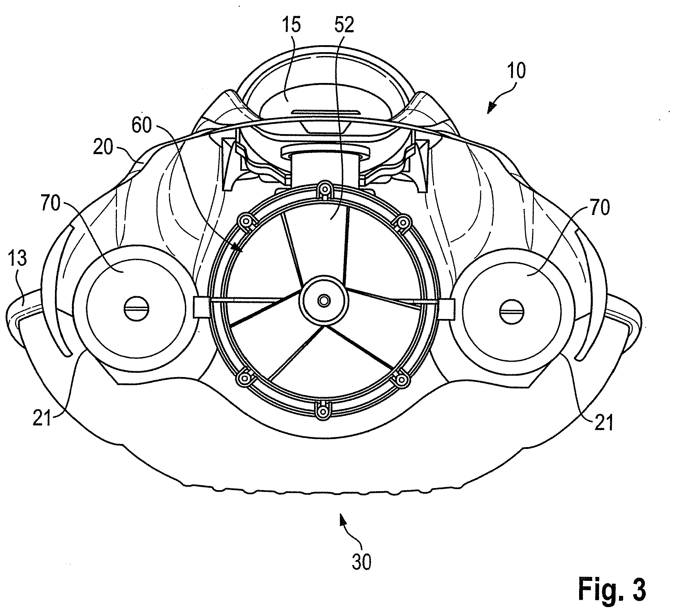

Fig. 3 lässt erkennen, dass die Aufnahmen 21 beidseitig der durch die Mittellängsachse L (siehe Fig. 2) verlaufenden Mittellängsebene des Wasserfahrzeuges angeordnet sind. Die Mittellängsebene verläuft in Fig. 3 vertikal. Die Zuordnung der beiden Aufnahmen 21 zu der Mittellängsebene ist so gewählt, dass sich eine symmetrische Bauweise ergibt. In den Aufnahmen 21 können Energiespeicher 70, die vorliegend als elektrische Akkumulatoren ausgebildet sind, angeordnet werden. Aufgrund der symmetrischen Anordnung der Aufnahmen 21 sind auch die Energiespeicher 70 symmetrisch zur Mittellängsebene angeordnet.

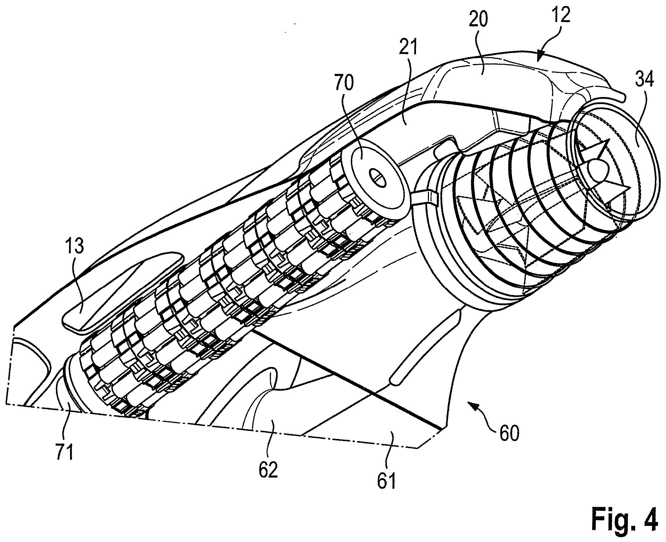

Fig. 4 gibt die Anordnung der Energiespeicher 70 in den Aufnahmen 21 zu erkennen. Wie Fig. 4 veranschaulicht, ist die Aufnahme 21 in Längsrichtung L des Wasserfahrzeuges länger dimensioniert als die Erstreckung des Energiespeichers 70 in dieser Richtung. Mithin bietet die Aufnahme 21 Platz für den alternativen Einbau eines anderen Energiespeichers 70, der eine entsprechend größere Bauweise aufweist und mithin eine höhere Leistung ermöglicht.

## Patentansprüche

1. Wasserfahrzeug mit einem Rumpf (10), der einem Strömungskanal (60) aufweist oder dem ein Strömungskanal (60) zugeordnet ist,
wobei dem Strömungskanal (60) eine motorbetriebene Wasser-Beschleunigungsanordnung, insbesondere ein Propeller (52) zugeordnet ist, und wobei der Motor (50) an einen Energiespeicher (70) angeschlossen ist, wobei zwei Energiespeicher (70) im Rumpf (10) verbaut sind,
und wobei die Energiespeicher (70) beidseitig der in Längsrichtung des Rumpfes (10) verlaufenden Mittellängsebene angeordnet sind,
wobei an eine Steuerelektronik (40) eine Überwachungseinrichtung angeschlossen ist, die einen oder mehrere Betriebszustände der Energiespeicher (70) überwacht,
wobei die Steuerelektronik eine Schalteinrichtung aufweist, mittels der wahlweise jeweils einer oder beide Energiespeicher (70) an den Motor anschließbar sind,
**dadurch gekennzeichnet dass** die Überwachungseinrichtung die Temperatur des Energiespeichers (70) überwacht und im Falle einer unzulässigen Überschreitung einer Maximaltemperatur dieser Energiespeicher (70) mittels der Schalteinrichtung abgeschaltet wird.

2. Wasserfahrzeug nach Anspruch 1,
**dadurch gekennzeichnet,**
**dass** die Energiespeicher (70) zumindest bereichsweise beidseitig des Strömungskanals (60) angeordnet sind.

3. Wasserfahrzeug nach einem der Ansprüche 1 oder 2,
**dadurch gekennzeichnet,**
**dass** die Energiespeicher (70) symmetrisch zur Mittellängsebene angeordnet sind.

4. Wasserfahrzeug nach einem der Ansprüche 1 bis 3,
**dadurch gekennzeichnet,**
**dass** zusätzlich zum Strömungskanal (60) ein wasserdurchströmbarer Flutungsraum im Rumpf (10) angeordnet ist,
und **dass** die Energiespeicher (70) zumindest bereichsweise im Flutungsraum angeordnet sind.

5. Wasserfahrzeug nach einem der Ansprüche 1 bis 4,
**dadurch gekennzeichnet,**
**dass** zumindest einer der Energiespeicher (70) in wenigstens zwei Einbaupositionen im Rumpf (10) festlegbar ist,
wobei die Einbaupositionen in Richtung der Längsachse (L) des Wasserfahrzeuges zueinander versetzt angeordnet sind.

6. Wasserfahrzeug nach einem der Ansprüche 1 bis 5,
**dadurch gekennzeichnet,**
**dass** der Rumpf (10) ein Oberteil (20) und ein mit diesem auswechselbar verbindbares Unterteil (30) aufweist,
wobei in dem von dem Oberteil (20) und dem Unterteil (30) umschlossenen Raum Aufnahmen (21) für die Energiespeicher (70) gebildet sind, in denen die Energiespeicher (70) demontierbar angeordnet sind.

7. Wasserfahrzeug nach einem der Ansprüche 1 bis 6,
**dadurch gekennzeichnet,**
**dass** der Massenschwerpunkt der Energiespeicher (70) in Richtung zum Heck (12) versetzt zu der senkrecht zur Längsachse (L) stehenden Mittelquerebene angeordnet ist.

8. Wasserfahrzeug nach einem der Ansprüche 1 bis 7,
**dadurch gekennzeichnet,**
**dass** der Rumpf (10) Aufnahmen (21) für die zwei im Rumpf (10) verbaubaren Energiespeicher (70) aufweist,
wobei die Aufnahmen (21) derart ausgelegt sind,
**dass** wahlweise Energiespeicher (70) unterschiedlicher Baugröße darin festlegbar sind.

## Claims

1. A watercraft comprising a hull (10) which has a flow channel (60) or with which a flow channel (60) is associated,
wherein the flow channel (60) is associated with a motor-driven water acceleration arrangement, in particular a propeller (52),
and wherein the motor (50) is connected to an energy store (70),
wherein two energy stores (70) are installed in the hull (10),
and wherein the energy stores (70) are arranged on both sides of the central longitudinal plane running in the longitudinal direction of the hull (10),
wherein a monitoring device is connected to a control electronics unit (40) and monitors one or more operating states of the energy stores (70),
wherein the control electronics unit comprises a switching device, by means of which one or both energy stores (70) can be connected to the motor selectively,
**characterised in that**
the monitoring device monitors the temperature of the energy store (70), and, in the case of an inadmissible exceedance of a maximum temperature, said energy store (70) is switched off by means of the switching device.

2. The watercraft according to claim 1,
**characterised in that**
the energy stores (70) are arranged, at least in regions, on both sides of the flow channel (60).

3. The watercraft according to either one of claims 1 or 2,
**characterised in that**
the energy stores (70) are arranged symmetrically with respect to the central longitudinal plane.

4. The watercraft according to any one of claims 1 to 3,
**characterised in that**
in addition to the flow channel (60), a flooding space through which water can flow is arranged in the hull (10),
and **in that** the energy stores (70) are arranged, at least in some regions, in the flooding space.

5. The watercraft according to any one of claims 1 to 4,
**characterised in that**
at least one of the energy stores (70) can be secured in at least two mounting positions in the hull (10),
wherein the mounting positions are arranged offset with respect to each other in the direction of the longitudinal axis (L) of the watercraft.

6. The watercraft according to any one of claims 1 to 5,
**characterised in that**
the hull (10) comprises an upper part (20) and a lower part (30) which can be interchangeably connected to same,
wherein receptacles (21) for the energy stores (70) are formed in the space enclosed by the upper part (20) and the lower part (30), in which receptacles the energy stores (70) are removably arranged.

7. The watercraft according to any one of claims 1 to 6,
**characterised in that**
the centre of mass of the energy stores (70) is arranged offset towards the stern (12) from the central transverse plane that running perpendicular to the longitudinal axis (L).

8. The watercraft according to any one of claims 1 to 7,
**characterised in that**
the hull (10) comprises receptacles (21) for the two energy stores (70) that can be installed in the hull (10),
the receptacles (21) being designed in such a way
that energy stores (70) of different sizes can be fixed therein selectively.

## Revendications

1. Embarcation comprenant une coque (10), laquelle comporte un canal d'écoulement (60) ou à laquelle un canal d'écoulement (60) est associé,
dans laquelle au canal d'écoulement (60) un dispositif d'accélération d'eau à moteur, en particulier une hélice (52) est associé,
et dans laquelle le moteur (50) est raccordé à un accumulateur d'énergie (70),
dans laquelle deux accumulateurs d'énergie (70) sont montés dans la coque (10),
et dans laquelle les accumulateurs d'énergie (70) sont disposés des deux côtés du plan longitudinal central s'étendant dans la direction longitudinale de la coque (10),
dans laquelle à une électronique de commande (40) un dispositif de surveillance est raccordé , lequel surveille au moins un état de fonctionnement des accumulateurs d'énergie (70),
dans laquelle l'électronique de commande comporte un dispositif de commutation au moyen duquel un accumulateur d'énergie (70) ou les deux peuvent être éventuellement respectivement raccordés au moteur,
**caractérisée en ce que**
le dispositif de surveillance surveille la température de l'accumulateur d'énergie (70) et, en cas de dépassement inadmissible d'une température maximale, ledit accumulateur d'énergie (70) est désactivé au moyen du dispositif de commutation.

2. Embarcation selon la revendication 1,
**caractérisée en ce que**
les accumulateurs d'énergie (70) sont disposés, au moins par zones, des deux côtés du canal d'écoulement (60).

3. Embarcation selon l'une quelconque des revendications 1 ou 2,
**caractérisée en ce que**
les accumulateurs d'énergie (70) sont disposés symétriquement par rapport au plan longitudinal central.

4. Embarcation selon l'une quelconque des revendications 1 à 3,
**caractérisée en ce que**
en plus du canal d'écoulement (60), une chambre de noyage pouvant être traversée par de l'eau est disposée dans la coque (10),
et **en ce que** les accumulateurs d'énergie (70) sont disposés, au moins par zones, dans la chambre de noyage.

5. Embarcation selon l'une quelconque des revendications 1 à 4,
**caractérisée en ce que**
au moins l'un des accumulateurs d'énergie (70) peut être fixé dans au moins deux positions d'installation dans la coque (10),
dans laquelle les positions d'installation sont disposées décalées les unes des autres dans la direction de l'axe longitudinal (L) de l'embarcation.

6. Embarcation selon l'une quelconque des revendications 1 à 5,
**caractérisée en ce que**
la coque (10) comporte une partie supérieure (20) et une partie inférieure (30) pouvant être raccordée à celle-ci de manière interchangeable,
dans laquelle dans une chambre entourée par la partie supérieure (20) et la partie inférieure (30), des logements (21) pour les accumulateurs d'énergie (70) sont formés, dans lesquels les accumulateurs d'énergie (70) sont disposés de manière amovible.

7. Embarcation selon l'une quelconque des revendications 1 à 6,
**caractérisée en ce que**
le centre de gravité des accumulateurs d'énergie (70) est disposé dans la direction allant vers la poupe (12),d'une manière décalée par rapport au plan transversal central perpendiculaire à l'axe longitudinal (L).

8. Embarcation selon l'une quelconque des revendications 1 à 7,
**caractérisée en ce que**
la coque (10) comporte des logements (21) pour les deux accumulateurs d'énergie (70) pouvant être installés dans la coque (10),
dans laquelle les logements (21) sont conçus de telle sorte que des accumulateurs d'énergie (70) de différentes tailles peuvent y être fixés de manière sélective.
